# EUROPÄISCHE PATENTSCHRIFT

(11) **EP 1 142 086 B1**
(45) Veröffentlichungstag und Bekanntmachung des Hinweises auf die Patenterteilung: **14.06.2006**
(21) Anmeldenummer: 99958129.1
(22) Anmeldetag: 27.11.1999
(51) Int. Cl.: H02K 49/06

(54) **ELEKTROMAGNETISCHE HYSTERESEEINHEIT**
ELECTROMAGNETIC HYSTERESIS UNIT
UNITE D'HYSTERESIS ELECTROMAGNETIQUE

(30) Priorität: 04.12.1998 DE 19856224; 19.04.1999 DE 19917667
(43) Veröffentlichungstag der Anmeldung: 10.10.2001
(73) Patentinhaber: ZF FRIEDRICHSHAFEN Aktiengesellschaft, 88038 Friedrichshafen (DE)
(72) Erfinder: SCHNEIDER, Rudolf, D-88074 Meckenbeuren (DE); UNSELD, Stefan, D-88138 Weissensberg (DE)
(86) Internationale Anmeldenummer: PCT/EP1999/009231
(87) Internationale Veröffentlichungsnummer: WO 2000/035067

(56) Entgegenhaltungen:
- EP-A- 0 312 601
- DE-A- 19 619 409
- US-A- 2 465 983
- US-A- 3 034 744
- PATENT ABSTRACTS OF JAPAN vol. 018, no. 155 (E-1524), 15. März 1994 (1994-03-15) & JP 05 328705 A (SAWAFUJI ELECTRIC CO LTD), 10. Dezember 1993 (1993-12-10)

## Beschreibung

Die Erfindung betrifft eine elektromagnetische Hystereseeinheit nach dem Oberbegriff von Anspruch 1.

Unter elektromagnetischen Hystereseeinheiten werden im folgenden Hysteresebremsen und Hysteresekupplungen verstanden. Die Arbeitsweise von Hystereseeinheiten, beruht auf einer magnetischen Kraftwirkung sich anziehender Pole im Synchronlauf und auf einem ständigen Ummagnetisieren eines magnetisch halbharten Materials, nämlich eines Hystereserings, im Schlupfbetrieb.

Im Unterschied zu Wirbelstromkupplungen bzw. -bremsen, die auf einem anderen physikalischen Prinzip beruhen, ist das übertragbare Moment bei Hystereseeinheiten weitgehend unabhängig von der Schlupfdrehzahl.

Die bekannteste Bauart solcher Hystereseeinheiten besteht aus einem Magnetkörper mit einer Erregerspule und je einem äußeren und inneren Polring mit axial ausgerichteten, aufgeprägten Weicheisenpolen gleicher Anzahl und Teilung, wobei die äußeren Pole gegenüber den inneren Polen im Stillstand oder beim Synchronlauf jeweils um eine halbe Teilung in Umfangsrichtung versetzt angeordnet sind und eine entgegengesetzte Polarisierung haben. Im radialen Zwischenraum dieser Polringe kann der Hysteresering als dünnwandiges, glockenförmiges Bauteil ohne Berührung rotieren.

Bei stromdurchflossener Magnetspule entsteht zwischen den Polen mit entgegengesetzter Polarität ein im wesentlichen radial gerichtetes Magnetfeld. Der Polversatz bewirkt jedoch eine wechselweise tangentiale Umlenkung des Magnetflusses im Hysteresering und damit ein permanentes Ummagnetisieren aller Elementarmagnete, wenn sich der Hysteresering relativ zum Magnetkörper dreht. Daraus resultiert ein Moment, welches nur vom Erregerstrom abhängt. Es kann geregelt und gesteuert werden, indem der Erregerstrom entsprechend verändert wird. Solche Hystereseeinheiten sind als Kupplung z. B. aus der US 2,488,827 bekannt. Dabei ist der Hysteresering radial zwischen zwei Teilen eines drehbaren Magnetkörpers angeordnet, die durch eine Scheibe aus nicht magnetisierbarem Material verbunden sind.

Ferner ist aus der DE 197 05 290 A1 eine Hysteresebremse bekannt, bei der ein Hysteresering einen geschlossenen Magnetring aus Permanentmagnetmaterial umgibt, dessen dem Hysteresering zugewandte Oberfläche mit einer Vielzahl am Umfang eingeprägter Pole mit einer abwechselnd entgegengesetzten Polarität versehen ist. Der Magnetring ist segmentweise radial durchmagnetisiert und mit einem Weicheisenmagnetkörper verbunden. Der Hysteresering läuft in einem ringförmigen Luftspalt zwischen dem Magnetring und einem Einstellring mit einem geringen radialen Spiel zum Magnetring. Das übertragbare Drehmoment ist durch eine axiale Verschiebung des Einstellrings einstellbar.

Der Hysteresering ist im allgemeinen aus einem Material mit einer geringen Wandstärke gefertigt und mit einem rotierenden Bauteil verbunden. Demgegenüber sind die mit einer größeren Masse behafteten Teile, z. B. die Magnetspule, der Magnetkörper usw. mit dem Gehäuse verbunden. Im Falle einer Hysteresekupplung wird ein Teil des Magnetkörpers von einem Rotor und einer mit diesem verbundenen Magnetflußleitscheibe gebildet, die mit einem geringen Spiel zum Magnetkörper rotieren.

Wegen der Luftspalte zwischen dem Hysteresering und den Polringen wird das Drehmoment berührungslos übertragen. Dabei erzeugen Bremsen sowohl im Schlupfbetrieb ein Bremsmoment als auch im Stillstand ein Haltemoment, so daß das abgebremste Bauteil auch in einer abgebremsten Position gehalten werden kann. Hysteresekupplungen übertragen sowohl Drehmomente im Synchronbetrieb, bei dem die gekupppelten Bauteile eine gleiche Drehzahl haben, als auch im Schlupfbetrieb, bei dem die zu kuppelnden Bauteile noch eine Drehzahldifferenz aufweisen. Die übertragbaren Momente sind nur vom Strom in der Erregerspule abhängig und können bis zu einem typenbezogenen, zulässigen Maximalwert stufenlos eingestellt werden.

Die im Schlupfbetrieb entstehende Verlustleistung heizt den dünnwandigen Hysteresering sehr schnell auf. Die Wärme kann nur sehr schlecht über die geringen Materialstärken des Hystereserings an die angrenzenden Bauteile abgeleitet werden, um von dort durch weitere Wärmeleitung und Konvektion abgeführt zu werden. Damit ist einerseits die zulässige Dauerschlupfleistung und andererseits die kurzzeitig aufnehmbare Schlupfarbeit sehr begrenzt.

Solche Hystereseeinheiten werden u. a. zur Zugkraftregelung für die Verarbeitung von gezogenen Endlosprodukten, wie z. B. Draht, Kabel, Seile, Folien, Papier, Fäden usw., verwendet. Sie werden auch für Bremsmomentregelsysteme und für eine Belastungssimulation eingesetzt, wie z. B. für Prüfstände, Ergometer usw.

Die US 3,034,744 zeigt eine elektromagnetische Hystereseeinheit, die als nächstliegender Stand der Technik betrachtet wird. Diese ist jedoch aufwendig herzustellen und zu montieren.

Der Erfindung liegt die Aufgabe zugrunde, die Nachteile des Standes der Technik zu vermeiden. Sie wird gemäß der Erfindung durch die Merkmale des Anspruchs 1 gelöst. Weitere Ausgestaltungen ergeben sich aus den Unteransprüchen.

Nach der Erfindung liegen die Umfangsflächen der Nordpole und Südpole auf demselben Kreis, dessen Mittelpunkt auf der Rotationsachse liegt. Ferner liegen sie gegenüber derselben Umfangsfläche des Hystereserings. Dadurch kann der Hysteresering an einer Umfangsfläche mit einem geringen Abstand zu den Magneten laufen, während er an der anderen Umfangsfläche in einen Rotor aus gut wärmeleitendem Material eingebettet ist, der zudem noch Kühlvorrichtungen aufweisen kann, z. B. in Form von Kühlrippen. Somit ist gewährleistet, daß die anfallende Wärme gut abgeführt wird und über eine längere Zeit hohe Schlupfdrehmomente übertragen werden können.

Zweckmäßigerweise umgibt der Hysteresering die Nordpole und die Südpole, so daß er mit den angrenzenden Rotorteilen am äußeren Umfang der Hystereseeinheit liegt. Dadurch ergeben sich zum einen große Wärmeabstrahlungsflächen, zum anderen erzeugt der Rotor in diesem Bereich selbst eine große Luftbewegung, die die Konvektion begünstigt. Im Umfangsbereich des Rotors werden zweckmäßigerweise Kühlrippen angeordnet, die sowohl axial als auch in Umfangsrichtung ausgerichtet werden können und durch Schlitze unterbrochen sein können.

Die Pole werden von Polfingern gebildet, die ausgehend von axialen Stimwänden des Magnetkörpers aufeinander zugerichtet sind und voneinander einen größeren Abstand haben als vom Hysteresering, so daß der Magnetfluß von einem Nordpol zu einem Südpol über den Hysteresering führt. Dabei können sich die Polfinger in vorteilhafter Weise in Umfangsrichtung überlappen.

Die Polfinger, die im wesentlichen axial verlaufen, verjüngen sich zu ihrem freien Ende hin in axialer Richtung und/oder in Umfangsrichtung. Dadurch werden Material und Gewicht eingespart und ein guter Magnetfluß erreicht. Insbesondere die Verjüngung in Umfangsrichtung bewirkt eine sehr gleichmäßige Verteilung des Magnetflusses zwischen benachbarten Polfingern, so daß der Hysteresering auf seiner Breite gleichmäßig Energie aufnimmt und lokale Temperaturspitzen vermieden werden.

Der Magnetkörper kann mit seinen Polfingern leicht hergestellt werden, da er in einer radialen Ebene geteilt ist, wobei die einzelnen Teile des Magnetkörpers jeweils die Polfinger einer Polarität erhalten. Ein Zentrierring zentriert die beiden Teile des Magnetkörpers gegeneinander, die üblicherweise durch Schrauben miteinander verbunden sind.

Um die rotierenden Massen klein zu halten, ist es vorteilhaft, den Magnetkörper mit der Magnetspule gehäusefest anzuordnen und einen Freiraum zwischen den Polfingern für eine Stromzuführung zu nutzen. In Kombination mit einem einseitig offenen, topfförmigen Rotor kann Strom ohne eine aufwendige und verschleißbehaftete Schleifringanordnung zugeführt werden.

Um die Stabilität der Polfinger zu vergrößem sowie Schwingungen und Strömungsgeräusche zu vermeiden, ist es zweckmäßig, daß die Polfinger durch einen nicht magnetisierbaren Werkstoff miteinander verbunden sind. Wenn dieser Werkstoff gut wärmeleitend ist, vorzugsweise Messing, kann er gleichzeitig dazu dienen, die anfallende Wärme gleichmäßig zu verteilen und nach außen abzuführen. Dabei kann der Werkstoff in vorteilhafter Weise als Füllmasse in die Zwischenräume zwischen den Polfingern eingebracht oder durch einen Verbindungsring gebildet werden, auf den die Polfinger aufgeschrumpft sind.

Wird die Hystereseeinheit als Kupplung ausgebildet, wird ein äußerer Teil des ersten Magnetkörpers zweckmäßigerweise durch einen Ringspalt getrennt und über den nicht magnetisierbaren Werkstoff mit dem zweiten Magnetkörper verbunden. Der Rest des ersten Magnetkörpers wird mit der Spule gehäusefest montiert, während der zweite Magnetkörper auf einem zu kuppelnden Bauteil sitzt und mit einem geringen Spalt zum ersten Magnetkörper drehbar gelagert ist. Ein zweites zu kuppelndes Bauteil ist drehfest mit dem Rotor der Hystereseeinheit verbunden, der den Hysteresering trägt.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigt:
- Fig. 1: einen Längsschnitt durch eine Hysteresebremse,
- Fig. 2: einen Schnitt entsprechend der Linie II-II in Fig. 1,
- Fig. 3: eine teilweise Abwicklung eines Hystereserings und einiger Polfinger nach Fig. 1,
- Fig. 4: einen Längsschnitt durch eine Hysteresekupplung, wobei die obere Hälfte eine Ausführung mit einem Verbindungsring und die untere Hälfte eine Ausführung mit einem Füllmaterial darstellt,
- Fig. 5: eine teilweise Abwicklung eines Hystereserings und einiger Polfinger nach Fig. 4 obere Hälfte und
- Fig. 6: eine teilweise Abwicklung eines Hystereserings und einiger Polfinger nach Fig. 4 untere Hälfte.

Die dargestellte Hystereseeinheit ist eine Hysteresebremse 1. Sie besitzt einen geteilten Magnetkörper 2, 3, der eine Magnetspule 6 umfaßt. Der Magnetkörper ist in einer Radialebene geteilt. Seine beiden Teile 2 und 3 werden durch einen Zentrierring 8 gegeneinander zentriert und durch Schrauben 9 miteinander verbunden. Der Magnetkörper 2, 3 besteht aus Weicheisen und besitzt an seinem äußeren Umfang Polfinger 4, 5, die sich im wesentlichen axial erstrecken und alternierend an dem Teil 2 bzw. Teil 3 des Magnetkörpers angeformt sind.

Wird die Magnetspule 6 über eine Stromzuführung 7 bestromt, bilden die Polfinger 4 im gezeigten Ausführungsbeispiel an dem Teil 2 des Magnetkörpers einen Nordpol, während die Polfinger 5 an dem Teil 3 des Magnetkörpers Südpole bilden. Der Magnetkörper 2, 3 ist gehäusefest montiert. Dadurch kann die Stromzuführung 7 in einfacher Weise durch einen der Freiräume 19 verlegt werden, die zwischen den Polfingern 4, 5 gebildet werden.

Im Magnetkörper 2, 3 ist über Kugellager 10, 11 eine Welle 12 gelagert, die um eine Rotationsachse 14 rotiert. Die Welle 12 trägt an ihren Enden Paßfedern 13, über die von rotierenden, nicht näher dargestellten Bauteilen ein Drehmoment auf die Welle 12 übertragen werden kann. Auf der Welle 12 sitzt fest ein einseitig offener, topfförmiger Rotor 17, in dem ein Hysteresering 16 aus magnetisch halbhartem Material eingebettet ist. Die Welle 12 ist zwischen einem Bund 22 am Rotor 17 und einem Sicherungsring 21 axial fixiert, der in die Welle 12 eingelassen ist. Der Rotor 17 selbst ist aus einem gut wärmeleitfähigen Material hergestellt und kann Kühlvorrichtungen in Form von Kühlrippen 18 tragen, um die Wärmeableitung und Konvektion zu verbessern. Die Kühlrippen 18 können in Umfangsrichtung oder axial verlaufen und Einschnitte und/oder Bohrungen aufweisen.

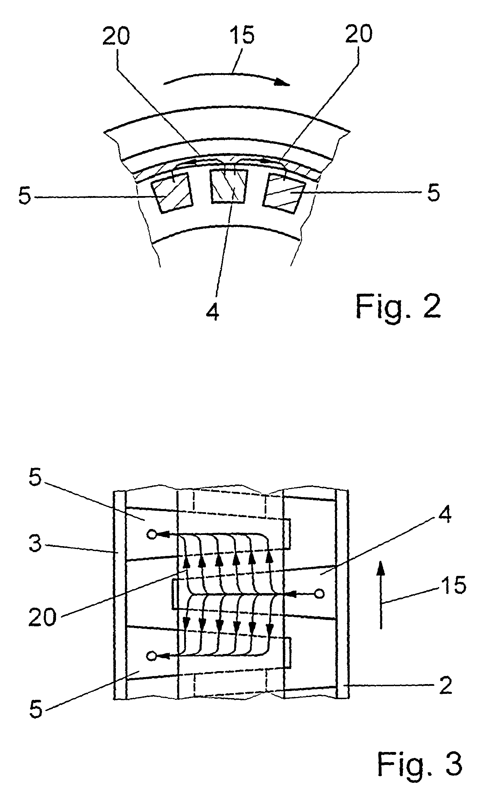

Fig. 2 zeigt, daß der Abstand der Polfinger 4, 5 untereinander größer ist, als der Abstand der Polfinger 4, 5 zum Hysteresering 16. Dadurch wird der Hysteresering 16 entsprechend dem Magnetfluß 20 durchflutet. Bei einer Relativbewegung des Hystereserings 16 in Umfangsrichtung 15 zum Magnetkörper 2, 3 werden die erzeugten Elementarmagnetzonen im Hysteresering 16 umpolarisiert, wodurch ein beträchtliches Drehmoment übertragen werden kann. Dieses Drehmoment ist in erster Linie von der Stromstärke abhängig, die durch die Magnetspule 6 fließt. Aufgrund der Verlustleistung im Schlupfbetrieb, die durch die Ummagnetisierung des Hystereserings 16 entsteht, fällt in diesem eine große Wärmemenge an. Diese wird allerdings über den Rotor 17 abgeleitet und an die Umgebung abgegeben, so daß gegenüber bekannten Hystereseeinheiten größere Drehmomente im Schlupfbetrieb übertragen werden können, ohne daß eine Überhitzung der Hysteresebremse zu befürchten ist.

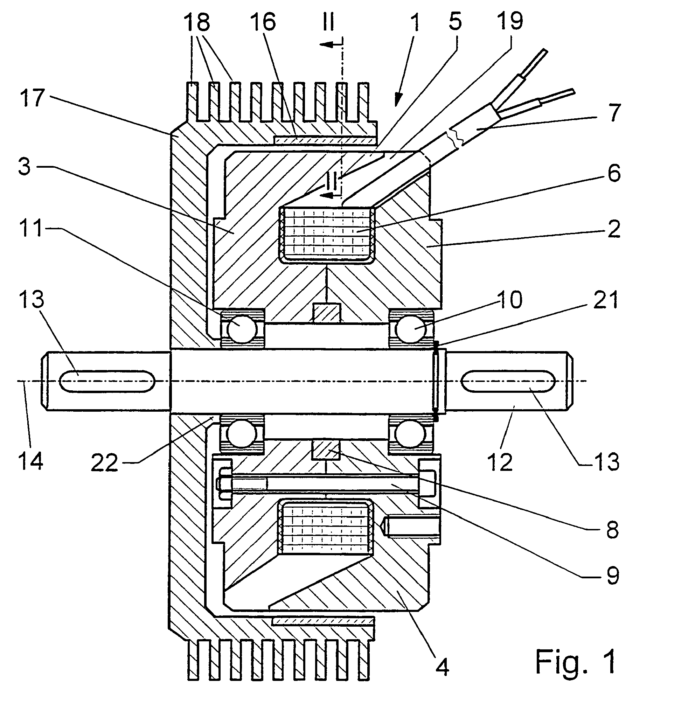

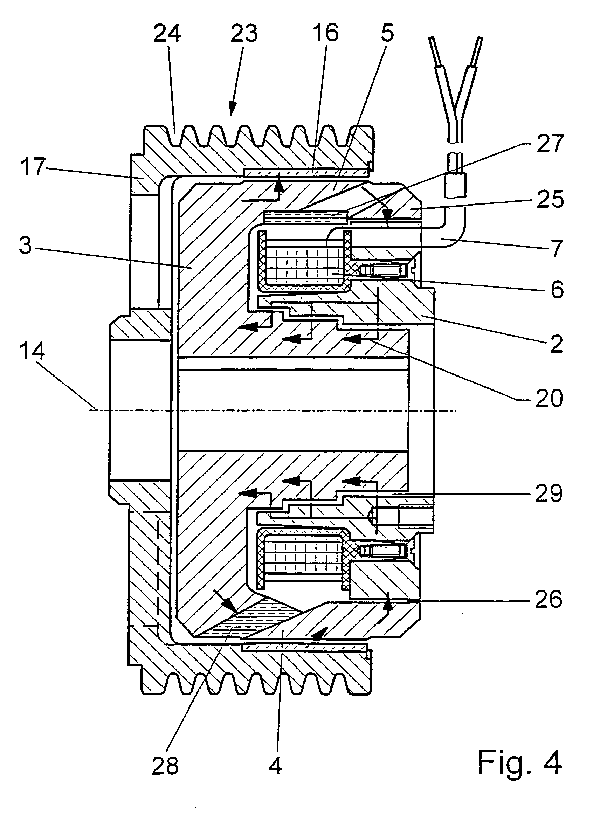

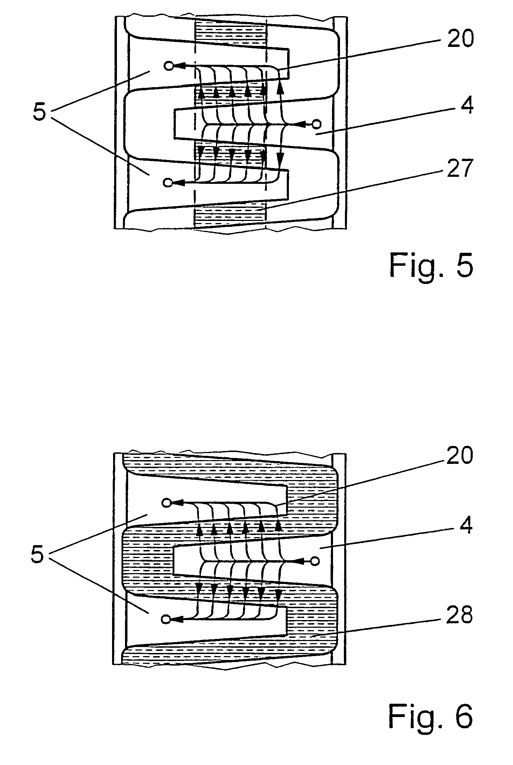

Die Hystereseeinheit 23 nach Fig. 4 ist eine Kupplung. Sie unterscheidet sich von der Hystereseeinheit 1 nach Fig. 1, die als Bremse ausgebildet ist, dadurch, daß der erste Magnetkörper 2, der gehäusefest montiert ist, einen äußeren Teil 25 besitzt, der durch einen schmalen Ringspalt 26 von dem übrigen ersten Magnetkörper 2 getrennt ist. Der äußere Teil 25 ist über einen Verbindungsring 27 aus einem nicht magnetisierbaren Werkstoff, vorzugsweise Messing, mit dem zweiten Magnetkörper 3 verbunden, indem er mit seinen Polfingern 4 und der zweite Magnetkörper 3 mit seinen Polfingern 5 auf den Verbindungsring 27 aufgeschrumpft sind (obere Hälfte von Fig. 4 und Fig. 5). Der Verbindungsring 27, der auch bei einer Hystereseeinheit 1 nach Fig. 1 angewendet werden kann, gibt der Hystereseeinheit 23 eine große Stabilität und dient gleichzeitig zur besseren Wärmeverteilung und Wärmeableitung.

Der zweite Magnetkörper 3 sitzt auf einem zu kuppelnden Bauteil und ist drehbar zum ersten Magnetkörper 2 gelagert, von dem er durch den Ringspalt 26 und durch einen Spalt 29 getrennt ist. Das andere zu kuppelnde Bauteil ist drehfest mit dem Rotor 17 verbunden, in den der Hysteresering 16 eingelassen ist. Der Rotor 17 besitzt am äußeren Umfang Rillen 24, um die Oberfläche zu vergrößern und dadurch die Wärme besser abzuführen. Der Rotor 17 kann an seinem Umfang gleichzeitig als Riemenscheibe für einen Antrieb ausgebildet sein.

Bei der Variante nach der unteren Hälfte von Fig. 4 und nach Fig. 6 sind die Zwischenräume zwischen den Polfingern 4, 5 mit einer nicht magnetisierbaren Füllmasse 28 ausgefüllt, die die Verbindung zwischen dem äußeren Teil 25 des ersten Magnetkörpers 2 und dem zweiten Magnetkörper 3 herstellt. Die Füllmasse 28 wird zweckmäßigerweise durch eine Guß- oder Einschmelztechnik in die Zwischenräume eingebracht. Als Füllmasse kann beispielsweise ein nicht magnetisierbares Metall, wie Messing, oder auch ein Kunststoff verwendet werden.

### Bezugszeichen

- 1: Hystereseeinheit
- 2: erster Magnetkörper
- 3: zweiter Magnetkörper
- 4: Polfinger, Nordpol
- 5: Polfinger, Südpol
- 6: Magnetspule
- 7: Stromzuführung
- 8: Zentrierring
- 9: Schraube
- 10: Kugellager
- 11: Kugellager
- 12: Welle
- 13: Paßfeder
- 14: Rotationsachse
- 15: Umfangsrichtung
- 16: Hysteresering
- 17: Rotor
- 18: Kühlrippen
- 19: Freiraum
- 20: Magnetfluß
- 21: Sicherungsring
- 22: Bund
- 23: Hystereseeinheit
- 24: Rille
- 25: äußere Teil
- 26: Ringspalt
- 27: Verbindungsring
- 28: Füllmasse
- 29: Spalt

## Patentansprüche

1. Elektromagnetische Hystereseeinheit (1, 23) mit magnetischen Nordpolen (4), die zu magnetischen Südpolen (5) in einem Abstand in Umfangsrichtung (15) um eine Rotationsachse (14) und abwechselnd zu diesen an einem Magnetkörper (2, 3) angeordnet sind, der eine Magnetspule (6) umfaßt, wobei mit einem geringen Spiel zu den Polen (4, 5) ein mit einem Rotor (17) verbundener Hysteresering (16) bewegbar vorgesehen ist, wobei die Umfangsflächen der Nordpole (4) und Südpole (5) auf demselben Kreis und gegenüber derselben Umfangsfläche des Hystereserings (16) liegen, der Hysteresering (16) die Nordpole (4) und die Südpole (5) umgibt, die Pole von Polfingern (4, 5) gebildet werden, die ausgehend von axialen Stimwänden des Magnetkörpers (2, 3) aufeinander zu gerichtet sind und voneinander einen größeren Abstand haben als vom Hysteresering (16) und der Hysteresering (16) mit einer Umfangsfläche an dem Rotor (17) anliegt, **dadurch gekennzeichnet, dass** der Rotor (17) aus einem gut wärmeleitenden Material besteht um die Wärmeableitung zu verbessern, dass der Magnetkörper (2, 3) zweiteilig aufgebaut und im Bereich der Magnetspule (6) radial geteilt ist, dass im Magnetkörper (2, 3) mittels zweier Kugellager (10, 11) eine durchgehende Welle (12) gelagert ist, auf welcher der Rotor (17) fest sitzt, wobei ein Bund (22) des Rotors (17) und ein auf der Welle (12) sitzender Sicherungsring (21) axiale Anschläge bilden, an denen jeweils ein Innenring eines der Kugellager (10, 11) anliegt, während die Außenringe der Kugellager an axialen Anschlägen anliegen, die von jeweils einem der beiden Teile des Magnetkörpers (2, 3) gebildet werden, wobei die Polfinger an den beiden Teilen des Magnetkörpers angeformt sind und sich in axialer Richtung zu ihrem freien Ende hin bezüglich ihrer radialen und tangentialen Ausdehnung verjüngen, und bezüglich ihrer radialen Ausdehnung spitz zulaufen.

2. Hystereseeinheit (1, 23) nach Anspruch 1, **dadurch gekennzeichnet, dass** der Rotor (17) Kühlvorrichtungen (18) aufweist.

3. Hystereseeinheit (1, 23) nach Anspruch 1 oder 2, **dadurch gekennzeichnet, dass** sich die Polfinger (4, 5) in Umfangsrichtung (15) überlappen.

4. Hystereseeinheit (1, 23) nach einem der vorhergehenden Ansprüche, **dadurch gekennzeichnet, dass** der Magnetkörper (2) gehäusefest angeordnet ist und die Stromzuführung (7) durch einen Freiraum (19) verlegt ist, der zwischen den Polfingern (4, 5) gebildet wird, wobei der Rotor einseitig offen, topfförmig ausgebildet ist.

## Claims

1. Electromagnetic hysteresis unit (1, 23) with magnetic north poles (4) disposed at a distance from magnetic south poles (5) in the circumferential direction (15) about an axis of rotation (14) and alternating with the latter on a magnetic body (2, 3) which has a magnetic coil (6), and a hysteresis ring (16) connected to a rotor (17) is disposed so as to be displaceable with a small clearance with respect to the poles (4, 5), and the circumferential surfaces of the north poles (4) and south poles (5) lie on the same circle and opposite the same circumferential surface of the hysteresis ring (16), which hysteresis ring (16) surrounds the north poles (4) and the south poles (5), and the poles are formed by pole fingers (4, 5) directed towards one another starting from axial end walls of the magnetic body (2, 3) and are at a bigger distance from one another than from the hysteresis ring (16), and the hysteresis ring (16) lies with a circumferential surface against the rotor (17), **characterised in that** the rotor (17) is made from a good heat-conducting material in order to improve heat discharge, and the magnetic body (2, 3) is of a two-part structure and is radially split in the region of the magnetic coil (6), and a continuous shaft (12) is mounted in the magnetic body (2, 3) by means of two ball bearings (10, 11) on which the rotor (17) is fixedly seated, and a collar (22) of the rotor (17) and a locking ring (21) seated on the shaft (12) form axial stops against which a respective inner ring of one of the ball bearings (10, 11) lies, whereas the outer rings of the ball bearings lie against axial stops formed respectively by one of the two parts of the magnetic body (2, 3), and the pole fingers are formed on the two parts of the magnetic body and taper in the axial direction towards their free ends by reference to their radial and tangential extension and extend to a point by reference to their radial extension.

2. Hysteresis unit (1, 23) as claimed in claim 1, **characterised in that** the rotor (17) has cooling devices (18).

3. Hysteresis unit (1, 23) as claimed in claim 1 or 2, **characterised in that** the pole fingers (4, 5) overlap in the circumferential direction (15).

4. Hysteresis unit (1, 23) as claimed in one of the preceding claims, **characterised in that** the magnetic body (2) is affixed to the housing and the power supply (7) is run through a free space (19) formed between the pole fingers (4, 5), and the rotor is of a dish-shaped design open at one end.

## Revendications

1. Unité électromagnétique à hystérésis (1, 23) comportant des pôles magnétiques nord (4) qui sont disposés sur un corps magnétique (2, 3) comprenant une bobine magnétique (6), à un certain écartement dans la direction circonférentielle (15) autour d'un axe de rotation (14) par rapport à des pôles magnétiques sud (5) et en alternance avec ces derniers, dans laquelle il est prévu une bague d'hystérésis (16) mobile, solidaire d'un rotor (17), qui présente un petit jeu par rapport aux pôles (4, 5), les surfaces périphériques des pôles nord (4) et des pôles sud (5) se trouvant sur un même cercle et face à la même surface circonférentielle de la bague d'hystérésis (16), la bague d'hystérésis (16) entourant les pôles nord (4) et les pôles sud (5), les pôles étant formés par des doigts polaires (4, 5) qui sont dirigés les uns vers les autres en partant de parois frontales axiales du corps magnétique (2, 3) et sont espacés d'une plus grande distance les uns des autres que de la bague d'hystérésis (16), et la bague d'hystérésis (16) étant en contact avec le rotor (17) par une surface circonférentielle, **caractérisée en ce que** le rotor (17) est fait d'une matière bonne conductrice de la chaleur, pour améliorer la dissipation de la chaleur, **en ce que** le corps magnétique (2, 3) est construit en deux parties et est divisé radialement dans la région de la bobine magnétique (6), **en ce qu'**un arbre ininterrompu (12) sur lequel le rotor (17) est fixé rigidement est monté rotatif dans le corps magnétique (2, 3) au moyen de deux roulements à billes (10, 11), un collet (22) du rotor (17) et une bague d'arrêt (21) montée sur l'arbre (12) formant des butées axiales contre chacune desquelles s'appuie une bague intérieure d'un des roulements à billes (10, 11), tandis que les bagues extérieures des roulements à billes sont appuyées contre des butées axiales qui sont formées chacune par une des deux parties du corps magnétique (2, 3), les doigts polaires étant venus de formage sur les deux parties du corps magnétique et s'amincissant en dimension radiale et en dimension tangentielle dans la direction axiale jusqu'à leur extrémité libre, et se terminant en pointe en ce qui concerne leur dimension radiale.

2. Unité à hystérésis (1, 23) selon la revendication 1, **caractérisée en ce que** le rotor (7) comporte des dispositifs de refroidissement (18).

3. Unité à hystérésis (1, 23) selon la revendication 1 ou 2, **caractérisée en ce que** les doigts polaires (4, 5) se chevauchent dans la direction circonférentielle (15).

4. Unité à hystérésis (1, 23) selon l'une des revendications précédentes, **caractérisée en ce que** le corps magnétique (2) est disposé rigidement solidaire d'une carcasse et **en ce que** l'amenée de courant (7) est passée à travers un espace libre (19) qui est formé entre les doigts polaires (4, 5), le rotor étant ouvert unilatéralement et en forme de godet.
